# EUROPEAN PATENT APPLICATION

(11) **EP 4 455 993 A1**
(43) Date of publication of application: **30.10.2024**
(21) Application number: 23179475.1
(22) Date of filing: 15.06.2023
(51) Int. Cl.: G06T 7/11

(54) **SYSTEM AND METHOD FOR TRAINING A SEGMENTATION METHOD WITH USER CORRECTIONS**

(30) Priority: 27.04.2023 US 202363462455 P
(71) Applicant: Koninklijke Philips N.V., 5656 AG Eindhoven (NL)
(72) Inventor: PAPACONSTADOPOULOS, Pavlos, Eindhoven (NL); KALANTARI, Leila, Eindhoven (NL); LAVES, Max-Heinrich Viktor, 5656AG Eindhoven (NL)
(74) Representative: Philips Intellectual Property & Standards

(57) **Abstract**

Some embodiments are directed to training a segmentation system. This segmentation system may include a fixed base segmentation model, which generates a base segmentation for an input image, and a fixed variant model, which generates a variant encoding data point for the input image in a variant encoding space, determining a variant segmentation for the base segmentation model. A further model may be trained from a user-corrected segmentation of the base segmentation by a corresponding adapted variant encoding data point in the variant encoding space, which lies closer to the user correction. Using this adapted variant encoding data point, the base segmentation model may yield a new segmentation of the input image.

## Description

### FIELD OF THE INVENTION

The presently disclosed subject matter relates to a method for training a segmentation system with user corrections, a method for a segmentation system allowing user corrections, a segmentation system allowing user corrections, a segmentation use system allowing user corrections, a computer-readable medium.

### BACKGROUND OF THE INVENTION

The segmentation of target tumor regions and organs at risk is an important feature of many clinics, e.g., in diagnostic and interventional radiology and oncology departments, including radiation oncology. It is equally important to improve this segmentation process where possible, and so avoid mistakes in diagnostic and treatment phases such as mis-diagnoses, mis-treatments and avoidable side effects.

In order to do so, over the last years there have been several artificial-intelligence segmentation algorithms introduced and used in medical imaging, employing deep-learning techniques. For example, Kohl et al. discuss in their conference paper "A Probabilistic U-Net for Segmentation of Ambiguous Images", incorporated herein by reference, a segmentation model that learns a distribution over segmentations given an input, producing an unlimited number of plausible hypotheses. Their model uses U-Net, a convolutional neural network developed for medical image segmentation, and a conditional variational auto-encoder.

Such deep-learning segmentation models are provided to clinics pre-trained (e.g., on training data from an academic hospital) and ready for deployment; this means they have not been trained using the specific clinical data, as this would require a high number of data, high-end computing resources and a substantial amount of time, which a regular clinic generally is not able to provide. These models reflect the behavior of the segmentation data they have been trained on, which shows the segmentation style of the clinic that has generated the training data, which may not be the same for other clinics.

Clinics, having different patient populations, may segment their patients differently from the segmentation population of training data the deep-learning models are trained on. Additionally, different departments or clinicians in the same clinic may segment differently, due to their different expertises or inter-observer variability. This may lead to clinicians having to intervene in segmentation review checks, during which they visually inspect and correct the segmentations resulting from the algorithms, in order to fine-tune the solutions to their clinic-specific segmentation guideline.

A disadvantage of this approach of reviewing and correcting the resulting segmentations is that the employed models do not learn from these corrections: the same model will develop the same, possibly wrong segmentations for identical patients, which will have to be corrected both. A solution to this for the deep-learning models would be a full re-training the deep learning model, but, as stated, this is expensive in time and resources, and thus not an available option to many clinics.

### SUMMARY OF THE INVENTION

It would be advantageous to have an improved segmentation method, wherein the used model actively learns from clinic-specific user corrections on resulting segmentations and improves its resulting segmentations accordingly.

The inventors found that when users correct the segmentations resulting from the used model, these user-corrected segmentations can also be regarded as new inputs for the model, and mapped as a new data point onto the same space where the input image has been mapped to, called the variant encoding space.

An embodiment of the method provides an approach to incorporate user corrections in a segmentation system. In this approach, a base segmentation model generates a base segmentation of an input image, and a variant model computes a variant encoding data point in a variant encoding space, corresponding to the input image. When a user correction of the base segmentation takes place, this user-corrected segmentation will also be mapped to an adapted variant encoding data point in the variant encoding space. Using this new information, the base segmentation model will provide a new segmentation.

There are several advantages to the presented methods. First, it is self-learning using user inputs. Also, the base segmentation model and the variant, which are pre-trained models, remain fixed during the training of the further model, which latter model is smaller than the base model. This substantially reduces the amount of computing and time required than if the base model would need to be trained. In addition, since the base segmentation model and the variant model are pre-trained on original training populations before deployment, remain fixed and are not training during employment, one is ensured they are and remain certified products when employed.

An embodiment provides a system to use the segmentation approach above. It would also be advantageous to have an improved segmentation method, wherein the used model both actively learns from clinic-specific user corrections on resulting segmentations and improves its resulting segmentations accordingly, and is fine-tuned according to the clinic-specific segmentation guideline this way without having to be fully re-trained.

The inventors also found that with enough clinic-specific patients and corresponding new data, following a method according to an embodiment, new distributions of solutions may emerge over time that can be used for future predictions. These new solutions may enable the models to adapt to the clinic-specific segmentation guidelines, and the clinicians to do less manual correction work of segmentations.

An embodiment of the method provides an approach to train a segmentation system on user corrections. In this approach, a further model is trained from the user-corrected segmentations, adapting the variant encoding data. New segmentations may use variant encoding data points that give segmentations that are closer to the user-corrected segmentations, whilst the base segmentation model and the variant model remain fixed during the training.

An embodiment provides a system to carry out the training approach above.

Some embodiments are directed to training a segmentation system. This segmentation system may include a fixed base segmentation model, which generates a base segmentation for an input image, and a fixed variant model, which generates a variant encoding data point for the input image in a variant encoding space, determining a variant segmentation for the base segmentation model. The base segmentation depends on the variant encoding data point, or in other words, the base segmentation is conditioned on the point in variant encoding space. A further model may be trained from a user-corrected segmentation of the base segmentation by a corresponding adapted variant encoding data point in the variant encoding space, which lies closer to the user correction. Using this adapted variant encoding data point, the base segmentation model may yield a new segmentation of the input image.

The segmentation methods as mentioned above may be implemented on a device. It may be an electronic device, in particular a computer. It may be able to carry out the methods mentioned above. It may be a mobile electronic device, e.g., a smart phone. On a computer, the methods may be implemented as new software, or a new software feature of some existing software application utilized for segmentation tasks, like the applications that are found in systems as in Intelispace Portal, DynaCAD or Multimodality Simulator. Executable code for an embodiment of the method may be stored on a computer program product. Examples of computer program products include memory devices, optical storage devices, integrated circuits, servers, online software, etc. Preferably, the computer program product comprises non-transitory program code stored on a computer-readable medium for performing an embodiment of the method when said program product is executed on a computer.

An embodiment provides a computer-readable medium allowing to perform the methods above. On this medium, the embodied computer program comprises computer program code adapted to perform all or part of the steps of an embodiment of the method when the computer program is run on a computer.

Another aspect of the presently disclosed subject matter is a method of making the corresponding computer program available for downloading, or sharing via, e.g., a cloud storage.

This renders the training a lot less time-consuming than if the base model would need to be trained. The segmentation methods described above may be applied in a wide range of practical applications. Such practical applications include any imaging platform that uses segmentation, e.g., Computed Tomography (CT) and Magnetic Resonance Imaging (MRI) imaging platforms, which may require corrections during the workflow in the clinical setting. Philips products like Philips DynaCAD / UroNav, Intelispace Portal, Multimodality Simulator are examples of such applications. Furthermore, in other industries than medical imaging similar situations a similar method may be of use for a predictive model of which the results may require user corrections, and for which a full re-training of a model is not viable: one may think of a navigation system in a car. Active learning can then be enabled similarly.

A person skilled in the art will appreciate that the method may be applied to multidimensional image data, e.g., to two-dimensional (2D), three-dimensional (3D) or four-dimensional (4D) images, acquired by various acquisition modalities such as, but not limited to, standard X-ray Imaging, CT, MRI, Ultrasound (US), Positron Emission Tomography (PET), Single Photon Emission Computed Tomography (SPECT), and Nuclear Medicine (NM).

The embodiments as mentioned above are described in the accompanying claims. Further, specific embodiments are set forth in the dependent claims.

### BRIEF DESCRIPTION OF DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,
Fig. 1a schematically shows an example of an embodiment of a segmentation system,
Fig. 1b schematically shows an example of an embodiment of a segmentation system,
Fig. 2a schematically shows an example of an embodiment of a segmentation training system,
Fig. 2b schematically shows an example of an embodiment of a segmentation use system,
Fig. 3-5 schematically show examples of embodiments of a segmentation training system,
Fig. 6 schematically shows an example of an embodiment of a segmentation training method,
Fig. 7a schematically shows a computer readable medium having a writable part comprising a computer program according to an embodiment,
Fig. 7b schematically shows a representation of a processor system according to an embodiment.

### Reference signs list

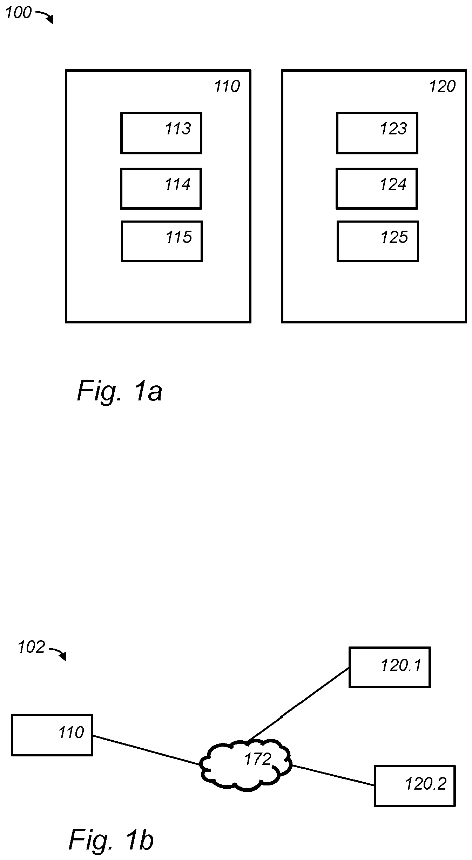

The following list of references and abbreviations corresponds to Figs. 1a-7b and is provided for facilitating the interpretation of the drawings and shall not be construed as limiting the claims.
- 100: a segmentation system
- 102: a segmentation system
- 110: a segmentation training device
- 113: a processor system
- 114: a storage
- 115: a communication interface
- 120,120.1,120.2: a segmentation use device
- 123: a processor system
- 124: a storage
- 125: a communication interface
- 172: a cloud sharing storage
- 200: a segmentation training system
- 201: an input image
- 204: a base segmentation
- 205: a user correction interface
- 206: a user-corrected segmentation
- 207: a new segmentation
- 210: a segmentation use system
- 220: a base segmentation model
- 221: a variant model
- 222: a first network in the base segmentation model
- 223: a second network in the base segmentation model
- 230: a segmentation mapping network
- 232, 233: variant encoding data points
- 234: variant encoding space
- 240: a further model
- 300: a segmentation training system
- 331: a further model
- 400: a segmentation training system
- 435: a sampling network
- 436,437: statistical parameters
- 438: statistical parameter space
- 439: a further model
- 500: a segmentation training system
- 504a-c: base segmentations
- 532a-c: variant encoding data points
- 534: variant encoding space
- 600: a method for training a segmentation system
- 610: receiving an input image
- 620: applying the variant model to the input image and computing variant encoding data
- 630: segmenting the input image using the base segmentation model
- 640: receiving the user-corrected segmentation
- 650: training the further model from the user-corrected segmentation
- 1000, 1001: a computer readable medium
- 1010: a writable part
- 1020: a computer program
- 1110: integrated circuit(s)
- 1120: a processing unit
- 1122: a memory
- 1124: a dedicated integrated circuit
- 1126: a communication element
- 1130: an interconnect
- 1140: a processor system

### DETAILED DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

Fig. 1a schematically shows an example of an embodiment of a segmentation training system 110 and a segmentation use system 120. Segmentation training system 110 and segmentation use system 120 may be part of a segmentation system 100.

Segmentation training system 110 is configured to train the segmentation system 100 in a specific way. Segmentation use system 120 enables users to interact and work with the resulting segmentation system.

For example, the system 100 may be used to be applied in the medical imaging field. There, images denoting anatomical structures of, e.g., organs at risk can be segmented in order to receive the right treatment tailored to the anatomical structure.

Segmentation training system 110 may comprise a processor system 113, a storage 114, and a communication interface 115. Storage 114 may be, e.g., electronic storage, magnetic storage, etc. The storage may comprise local storage, e.g., a local hard drive or electronic memory. Storage 114 may comprise non-local storage, e.g., cloud storage. In the latter case, storage 114 may comprise a storage interface to the non-local storage. Storage may comprise multiple discrete sub-storages together making up storage 114.

Storage 114 may be non-transitory storage. For example, storage 114 may store data in the presence of power such as a volatile memory device, e.g., a Random Access Memory (RAM). For example, storage 114 may store data in the presence of power as well as outside the presence of power such as a non-volatile memory device, e.g., Flash memory. Storage 114 may comprise a non-volatile non-writable part, e.g., ROM, e.g., storing part of the software.

In the various embodiments of communication interface 115, the communication interface may be selected from various alternatives. For example, the interface may be a network interface to a local or wide area network, e.g., the Internet, a storage interface to an internal or external data storage, an application programming interface (API), etc.

Device 110 may communicate internally, with other systems, with other devices, external storage, input devices, output devices, and/or one or more sensors over a computer network. The computer network may be an internet, an intranet, a LAN, a WLAN, etc. The computer network may be the Internet. The device 110 comprise a connection interface which is arranged to communicate within system 100 or outside of system 100 as needed. For example, the connection interface may comprise a connector, e.g., a wired connector, e.g., an Ethernet connector, an optical connector, etc., or a wireless connector, e.g., an antenna, e.g., a Wi-Fi, cellular antenna.

The communication interface 115 may be used to send or receive digital data, e.g., resulting segmentations.

Device 110 may be part of a system 100. Device 110 may have a user interface, which may include well-known elements such as one or more buttons, a keyboard, display, touch screen, etc. The user interface may be arranged for accommodating user interaction for performing, e.g., corrections, adaptation, or interventions.

The execution of segmentation training system 110 may be implemented in a processor system. Segmentation training system 110 may comprise functional units to implement aspects of embodiments. The functional units may be part of the processor system. For example, functional units shown herein may be wholly or partially implemented in computer instructions that are stored in a storage of the device and executable by the processor system.

The processor system may comprise one or more processor circuits, e.g., microprocessors, CPUs, GPUs, etc. Device 110 may comprise multiple processors. A processor circuit may be implemented in a distributed fashion, e.g., as multiple sub-processor circuits. For example, segmentation training system 110 may use cloud computing.

Typically, the segmentation training system 110 comprises a microprocessor which executes appropriate software stored at the device; for example, that software may have been downloaded and/or stored in a corresponding memory, e.g., a volatile memory such as RAM or a non-volatile memory such as Flash.

Instead of using software to implement a function, segmentation training system 110 may, in whole or in part, be implemented in programmable logic, e.g., as field-programmable gate array (FPGA). The device may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, segmentation training system 110 may comprise circuits, e.g., for cryptographic processing, and/or arithmetic processing.

In hybrid embodiments, functional units are implemented partially in hardware, e.g., as coprocessors, and partially in software stored and executed on the device.

Fig. 1b schematically shows an example of an embodiment of a segmentation system. Here, the segmentation training system is connected to a cloud storage system 172, to which multiple segmentation use systems are connected as well. This may illustrate an option of uploading, storing, sharing and downloading data obtained by multiple users or clinics. This data may describe user-specific or clinic-specific behavior, characterized, e.g., by the different distributions displayed by the variant encoding data. In this computing cloud implementation, each user or clinic can contribute their own distribution, reflecting their own behavior. This information itself may not mean anything specific, but it allows users or clinic to compare their distributions, and be clustered, or grouped otherwise, accordingly if their distributions are close to each other or behave very differently. This data may be meaningful, especially for new users or clinics if they may seek for reference data, or for the developer if they may want to validate or update the original training dataset population.

Variant encoding data points do not comprise sensitive patient data, or at least are much less likely to do so. Accordingly, sharing variant encoding data points is less likely to run afoul of privacy regulations.

The abovementioned training methods may be computer-implemented methods. For example, accessing and sharing the training data, and/or receiving other input data may be done using a communication interface, e.g., an electronic interface, a network interface, a memory interface, etc. For example, storing or retrieving training parameters may be done from an electronic storage, e.g., a memory, a hard drive, etc. For example, adjusting stored parameters may be done using an electronic computing device, e.g., a computer.

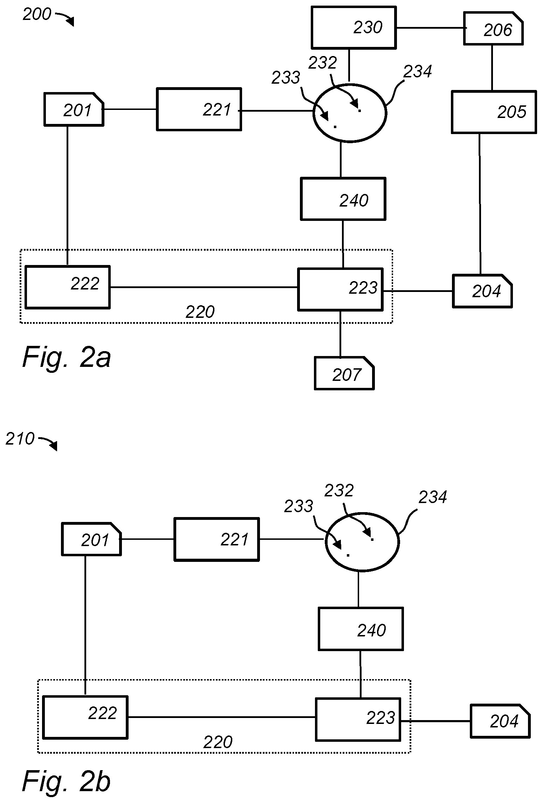

Fig. 2a schematically shows an example of an embodiment of a segmentation training system 200. This segmentation training system is configured to receive an input image 201. The input image 201 may comprise for example a medical image of an organ at risk, or a suspected tumor, for which a segmentation of the anatomical structure is needed. During a diagnostic or pre-treatment phase, a segmentation of the organ or the tumor may yield valuable information on the diagnosis, or how to proceed further treatment. For example, for a patient of whom it is suspected they might suffer from prostate cancer, it is common practice to order multiparametric MRI images at the department of diagnostic radiology. Using a system like the Philips DynaCAD, such images can be segmented; though any image analysis and/or segmentation system may be used.

Input images may stem from a patient of a clinic itself. An input image may also originate from a population of images, from the clinic itself, from another, known clinic, or an unknown clinic, of which there is a certain image population that may serve as a training population for the segmentation training system or parts of the segmentation training system. The segmentation training system may be pre-trained or actively trained during a part or parts of the training process.

The input image enters a base segmentation model 220 and a variant model 221.

The base segmentation model 220 may comprise a pre-trained network, e.g., trained for a specific anatomical reading protocol for a specific organ, e.g., a lung, a rib cage, or a prostate. During the pre-training, it had been learnt how to generate segmentations over the specific anatomical structure based on ground truth segmentations originating from an original training population. The base segmentation model may be trained prior to deployment by utilizing a large dataset from a training population, which, e.g., comprises possible input images originating from a certain clinic for the specific anatomical purpose.

Typically, the resulting parameters from the pre-training which are consequentially employed by the base segmentation model remain fixed during deployment, e.g., in a different, new clinic.

In order to improve performance for a specific anatomical purpose, it may be best to have multiple deep learning models for different segmentation tasks: that is, employ a certain model A for long nodule segmentations, and a different model B for spine fracture segmentations. The base segmentation model may comprise a first network 222 and a second network 223, with the first network receiving the input image. The first network may comprise a convolutional network. An example of such a convolutional network may be a U-Net, which is a convolutional neural network especially developed for medical image segmentation. Further examples of possible convolutional networks that can be considered for the first network in the base segmentation model may be a Bayesian neural network, a concatenation of such networks, a Monte Carlo network, etc., trained on a population of test input images from a dataset. The first network is connected to the second network, which receives the output of the first network.

The variant model 221 may comprise a pre-trained, probabilistic network, e.g., trained on an original training population of possible input images, fully similarly to how the base segmentation model is trained. The variant model also may comprise a convolutional network, similarly to the first network in the base segmentation model, e.g., a combination of a U-Net with a conditional variational auto-encoder. Typically, the resulting parameters from the pre-training which are consequentially employed by the variant model remain fixed during deployment, just like the base segmentation model.

The variant model receives the input image, and computes a variant encoding data point 232 in a variant encoding space 234. This may comprise a lower-dimensional feature map, with each segmentation that is generated and/or corrected corresponding to a certain, distinct, single variant encoding data point in the variant encoding space. In many similar applications, the variational encoding space may be, e.g., of a dimension less than 100, preferably less than 10. An example of such a mapping may be following a Gaussian distribution or concatenations thereof, with the network, which is the variant model here, trained using a standard training procedure for, e.g., conditional variational auto-encoders.

Interestingly, with a large amount of training input images, like of the order of thousands or tens of thousands, which all are mapped on the variant encoding space 234, with each different point in 234 giving rise to a different segmentation, a distribution reflecting the user-specific or clinic-specific types of segmentations will arise and be adapted with each new image input. The resulting distributions which reside in this variant encoding space may create new samples for new resulting segmentations for input images. The variant encoding space may be constructed in such a way that the variant encoding points corresponding to similar segmentations also reside close to each other, using, e.g., a loss function like a cross-entropy loss function or Kullback-Leibler divergence loss function. All individual variant encoding data points contribute to the output prediction of the base segmentation model this way. The variant encoding point is received by a further model 240, which is on its own connected to the second network 223 of the base segmentation model. This way, the variant encoding space determines variant segmentations for the base segmentation model.

The further model 240 is connected to the second network in the base segmentation model. The further model also receives the variant encoding data point 232 from the variant encoding space 234, which correspond to segmentations, also to the corrected segmentations. This way, the further model may be trained from the user-corrected segmentations, as the adapted variant encoding data point 233 in the variant encoding space 234 arising from user corrections also enters the further model. This training can be achieved, e.g., by multivariate Gaussian process regression. The further model can also be trained to reflect only a certain, selected area of the variant encoding space via multivariate Gaussian process regression. The further model may comprise an affine map, a matrix multiplication or a neural network. If a neural network is used in the further model, then this neural network may be smaller, even much smaller than the base segmentation model. By the training of the further model, the further model adapts the variant encoding space 234, allowing the base segmentation model 220 to learn from the user corrections via the adapted variant encoding data point, which yields a new variant segmentation from the newly formed space of variant encoding data. The further model may also be configured to find an adapted variant encoding data point that corresponds to being closer to user-corrected segmentations were these segmentations represented by a point in the variant encoding space. In this process of finding such an adapted variant encoding point, the further model may also be trained.

The further model may be of a comparatively simpler nature, and so training the further model may be much faster than training the variational model and/or the base segmentation model. For example, in an embodiment the input and/or output dimension of the further model is at most 100, at most 10, e.g., 6. In an embodiment the input dimension equals the output dimension of the further model.

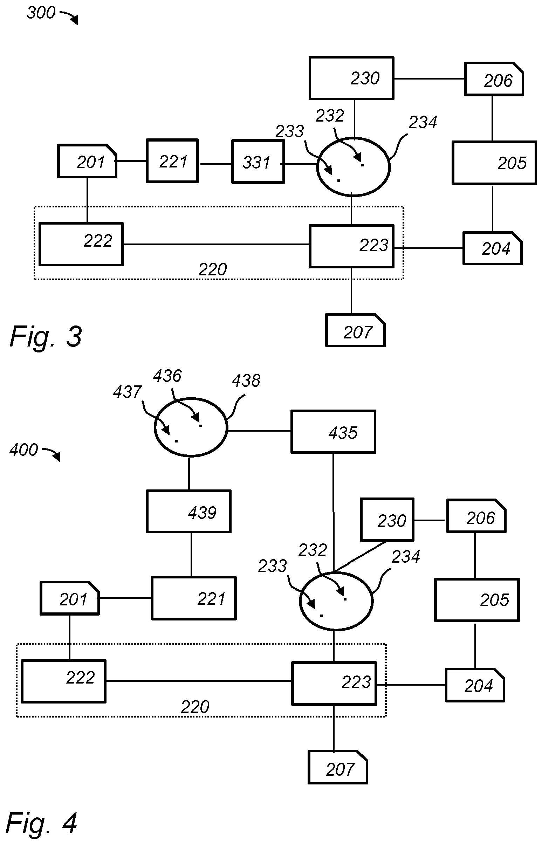

Note that the base segmentation model 220 and the variant model 221 both remain fixed during this training of the further model 240. With each new image input, the variant encoding space may contain an improved distribution, reflecting the user- or clinic-specific behavior more. The further model is then made user-specific or clinic-specific. The further model could be worthwhile to share with other users or clinics, as discussed in the description of Fig. 1b above. Also, the further model could be placed elsewhere in the system: see, e.g., the description of Fig. 3.

The output of the further model 240 is received by the second network 223 in the base segmentation model. The second network is configured to generate various segmentations for the given input image, and this way produces a distribution over various possible segmentations.

From the base segmentation model, a base segmentation 204 of the input image 201 may eventually be obtained as an output, which corresponds to the variant encoding data point 232. This base segmentation then enters a user correction interface 205.

The user correction interface 205 enables the user to correct the base segmentation 204 of the input image 201. This user correction interface may have various forms; it should at least display the base segmentation in some form, so that it may be inspected and possibly corrected by the user. The user may employ a software tool, by which the user may visually inspect the resulting base segmentation, and correct the segmentation according to the user-specific or clinic-specific behavior by, e.g., adapting the contours of the base segmentation of the input image. This correction may take place using an electronic or digital pen, a contour brush, etc. Besides drawing onto the visual representation of the base segmentation, the user may also be able to choose from different options for base segmentations that result from the base segmentation model, which could be displayed by the correction interface as a distribution of possible segmentations in a heat map. This way, the user may select the most-desired segmentation by simply clicking on it using a mouse, a touch screen or any other selecting device. Also, a combination of the above options may be possible, e.g., modifying or correcting several out of optional segmentations that are shown in, e.g., a heat map. This way, over time the overall system may learn from and so be trained on user-specific segmentation behavior. A user-corrected segmentation 206 results from the user correction interface. This user-corrected segmentation may further be saved and possible shared using a database, and be flagged, which stands for being corrected.

The user-corrected segmentation 206 enters a segmentation mapping network 230, which maps the user-corrected segmentation to an adapted variant encoding point 233 in the variant encoding space 234. The segmentation mapping network may also be a pre-trained network on segmentations, like the base segmentation model and the variant model. In the variant encoding space 234, the adapted variant encoding data point 233 is found that corresponds to being closer to the user-corrected segmentation 206: this means that if this adapted variant encoding data point 233 would be fed into the base segmentation model, the resulting segmentation would resemble the user-corrected segmentation 206 more closely than the base segmentation 204. This also means the corresponding variant encoding data points reside close to each other in the variant encoding space. How to find such an adapted variant encoding data point 233 may be done by using, e.g., assigning a statistical distance to points in the variant encoding space as induced by, e.g., a Kullback-Leibner divergence, cross-entropy losses or weighted combinations of such. The segmentation mapping network may also be trained in the process of finding variant encoding points residing close to each other. A dataset, possibly presented as, e.g., a table or a list, containing variant encoding points 232 and adapted variant encoding data points 233 may also be saved and possibly shared utilizing a database and a data-sharing feature such as a cloud storage.

As stated above, the variant encoding point is received by the further model 240, which is trained from the mentioned process of correcting base segmentations, and forms an adaption mechanism learning the desired user-specific or clinic-specific behavior this way. The further model receives the adapted variant encoding data point representing the most-desired realization of the segmentation in the variant encoding space, which has been found and likely be stored in a database. If this process is repeated for every new instance of a patient of the user or clinic the base segmentation model has been employed for, the variant encoding space and therefore the database will be populated with a distribution of user-specific or clinic-specific variant encoding data points. The segmentations that had not been adapted or corrected by the user will correspond to variant encoding data points as if they had been generated by the distribution arising from the original training population during the original training of the base segmentation model. For the user-corrected segmentations, the corresponding variant encoding data points deviate from the original training distribution. This way, the user-specific or clinic-specific distribution in the variant encoding space stabilizes over time, and may be used to create new samples. The base segmentation model, the variant model and the segmentation mapping network are not trained nor altered otherwise during this process: the segmentation performance of these models has not been changed either. Although these models remain fixed, a new feature may arise using the new distribution in the variant encoding space: the user can opt for new samples using the original training distribution or for new samples using the new, user-specific or clinic-specific distribution. This feature could be implemented as a part of the use system.

Additionally, the further model could be trained on a specific, selected area in the variant encoding space reflecting the desired user-specific or clinic-specific behavior. This may be achieved using, e.g., multivariate Gaussian process regression.

Eventually, a new segmentation 207, corresponding to the adapted variant encoding data point 233, may be generated by the base segmentation model 220, following the above process. It is also optional to share these new segmentations using, e.g., a cloud sharing storage. An advantage of using this new segmentation 207 may be, that it makes the process more consistent than if the user would use and continues to work with the user-corrected segmentation 206, and possibly save and possibly this segmentation, as the new segmentation 207 may always be an improvement over the user-corrected segmentation 206.

Fig. 2b schematically shows an example of an embodiment of a segmentation use system 210. This system is able to perform segmentations without training, using the base segmentation 204 which results from using the base segmentation model 220 as `new segmentation'. Here, the further model is pre-trained on a dataset, similarly to the base segmentation and variant models. Fig. 2a can be considered to be a special case of Fig. 2b, in which the training takes place.

Fig. 3 schematically shows an example of an embodiment of a segmentation training system 300, which is similar to the segmentation training system 200 as shown in Fig. 2a, except for the placing of the further model 331. In Fig. 3, the further model 331 is placed between the variant model 221 and the variant encoding space 234. As a consequence, here the training takes place earlier in the process. This way, the original distribution may be re-trained in the variant encoding space, with the re-training happening on statistical parameters as output of the further model 331 which may later be used for variational encoding data points.

Fig. 4 schematically shows an example of an embodiment of a segmentation training system 400, where statistical parameters 436 as output of a further model 439 in a parameter space 438 are generated from the input image 201, wherein the further model 439 is placed between the variant model 221 and the parameter space 438 just as in the embodiment depicted by Fig. 3. From the parameter space 438, parameter samples are generated by a sampling network 435, which then function as variant encoding data points 232 for the base segmentation model 220. This embodiment can be seen as an extension of the embodiment depicted by Fig. 3.

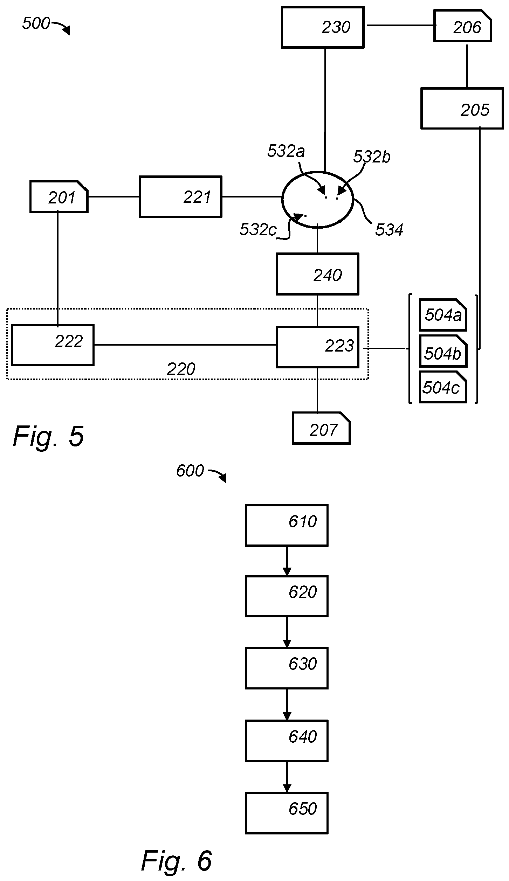

Fig. 5 schematically shows an example of an embodiment of a segmentation training system 500, where the user correction interface 205 comprises selecting a segmentation 206 out of multiple possible segmentations 504a, 504b, 504c (not necessarily limited to the number of three) that are obtained from the base segmentation model 220, corresponding to different variant encoding data points 532a, 532b, 532c (not necessarily limited to the number of three). This means that the segmentation 206 equals one of the segmentations 504a, 504b, or 504c. The mapping 230 then comprises selecting this corresponding variant encoding data point to 206, that is, 532a, 532b, 532c, respectively, out of the already available variant encoding data points. This also means that no new variant encoding point is created during this process, and that the action depicted by the network 230 may only be looking up in a table which variant encoding point out of 532a, 532b and 532c corresponds to the segmentation 206.

Fig. 6 schematically shows an example of an embodiment of a segmentation training method 600. This method entails the training of a segmentation system, the segmentation system comprising a base segmentation model and a variant model. The first phase 610 in the method comprises receiving an input image. The second phase 620 is applying the variant model to the input image and computing variant encoding data, wherein the variant encoding data determine variant segmentations for the base segmentation model. The third phase 630 comprises segmenting the input image using the base segmentation model, wherein the base segmentation model receives the input image and the variant encoding data, and is configured to generate a base segmentation of the input image corresponding to the variant encoding data. The fourth phase 640 comprises receiving a user-corrected segmentation correcting the base segmentation of the input image. The last phase 650 comprises training a further model from the user-corrected segmentation, wherein the further model adapts the variant encoding data, and a new segmentation from the base segmentation model using the variant encoding data is closer to the user-corrected segmentation. Here, the base segmentation model and variant model remain fixed during the training phase.

Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform method 600. Software may only include those steps taken by a particular sub-entity of the system. The software may be stored in a suitable storage medium, such as a hard disk, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array, to perform the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

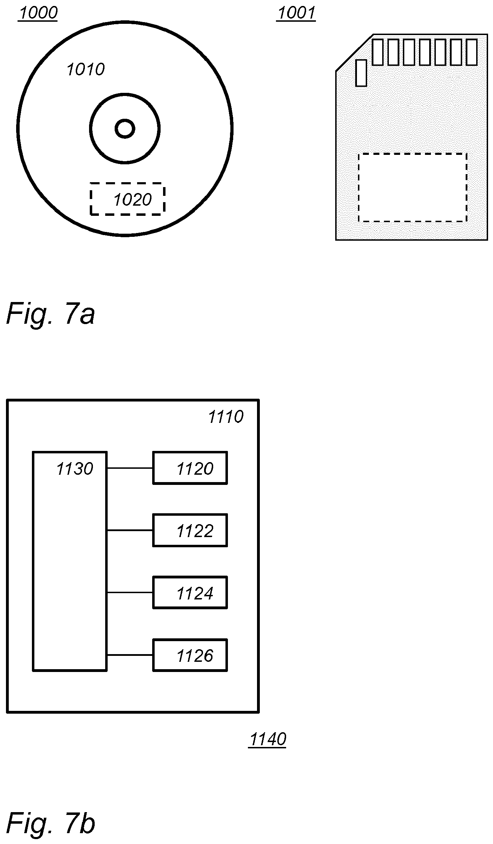

Fig. 7a shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of the method, e.g., as depicted in Fig. 6. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform an embodiment of said method, e.g., as set out in the accompanying claims.

Fig. 7b shows in a schematic representation of a processor system 1140 according to an embodiment of the method as, e.g., depicted in Fig. 6. The processor system comprises one or more integrated circuits 1110. The architecture of the one or more integrated circuits 1110 is schematically shown in Fig. 7b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140 may comprise a processor circuit and a memory circuit, the processor being arranged to execute software stored in the memory circuit. For example, the processor circuit may be an Intel Core i7 processor, ARM Cortex-R8, etc. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

While system 1140 is shown as including one of each described component, the various components may be duplicated in various embodiments. For example, the processing unit 1120 may include multiple microprocessors that are configured to independently execute the methods described herein or are configured to perform steps or subroutines of the methods described herein such that the multiple processors cooperate to achieve the functionality described herein. Further, where the system 1140 is implemented in a cloud computing system, the various hardware components may belong to separate physical systems. For example, the processor 1120 may include a first processor in a first server and a second processor in a second server.

For example, in an embodiment of the segmentation method according to the invention the input is a medical image and the base segmentation is a segmentation of anatomical structures.

In another example, an embodiment of the segmentation method according to the invention comprises that the further model is trained and shared with other users.

In another example, an embodiment of the segmentation method according to the invention comprises that the further model 240 is trained on a selected set of the variant encoding space 234.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of' when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A method (600) for training a segmentation system (200), the segmentation system (200) comprising a base segmentation model (220) and a variant model (221), the method comprising:
- receiving (610) an input image (201),
- applying (620) the variant model (221) to the input image (201), and computing a variant encoding data point (232), the variant encoding data point (232) determining a variant segmentation for the base segmentation model (220),
- segmenting (630) the input image (201) using the base segmentation model (220), the base segmentation model (220) receiving the input image (201) and the variant encoding data point (232), and being configured to generate a base segmentation of the input image (204), corresponding to the variant encoding data point (232),
- receiving (640) a user-corrected segmentation (206) correcting the base segmentation of the input image (204),
- training (650) a further model (240) from the user-corrected segmentation (206), the further model adapting the variant encoding data point (233), a new segmentation (207) from the base segmentation model (220) using the variant encoding data point (233) being closer to the user-corrected segmentation (206), the base segmentation model (220) and variant model (221) being fixed during said training.

2. A segmentation method as in Claim 1, wherein the user correction (205) comprises selecting a segmentation (206) out of multiple possible segmentations (504a;504b;504c) obtained from the base segmentation model (220).

3. A segmentation method as in any of the preceding claims, wherein applying the variant model (221) entails generating statistical parameters (436) corresponding to the input image (201), from which parameter samples are generated as variant encoding data points (232) for the base segmentation model (220).

4. A segmentation method as in any of the preceding claims, the variant model (221) and/or the base segmentation model (220) being trained on a population of images from a dataset.

5. A segmentation method as in any of the preceding claims, wherein the variant model (221) processing the input image (201) is a convolutional network.

6. A segmentation method as in any of the preceding claims, wherein the base segmentation model (220) comprises a first network (222) and a second network (223), the first network (222) receiving the input image (201), the second network (223) receiving the variant encoding data point (232), and the output of the base segmentation model (220) is the base segmentation (204).

7. A segmentation method as in any of the preceding claims, wherein the first network (222) in the base segmentation model (220) is a convolutional network.

8. A segmentation method as in any of the preceding claims, the further model (240;331) being trained using multi-variate Gaussian process regression.

9. A segmentation method as in any of the preceding claims, wherein the user correction (205) adapts contours in the base segmentation of the input image (204).

10. A segmentation method as in any of the preceding claims, the further model (240) being configured to find adapted variant encoding data points (233) corresponding to being closer to the user-corrected segmentation (206).

11. A segmentation method as in any of the preceding claims, the further model (240) being trained in a process of finding adapted variant encoding data points (233) corresponding to being closer to user-corrected segmentations (206).

12. A method for a segmentation system, the segmentation system comprising a base segmentation model (220) and a variant model (221), the method comprising:
- receiving an input image (201),
- applying the variant model (221) to the input image (201), and computing a variant encoding data point (232), the variant encoding data point (232) determining a variant segmentation for the base segmentation model (220),
- segmenting the input image (201) using the base segmentation model (220), the base segmentation model (220) receiving the input image (201) and the variant encoding data (232), and being configured to generate a base segmentation of the input image (204), corresponding to the variant encoding data (232),
- using a further model trained as in Claim 1-11, receiving the user-corrected segmentation (206), the further model being configured to find an adapted variant encoding data point (233) corresponding to being closer to the user-corrected segmentation (206), a new segmentation (207) from the base segmentation model (220) using the adapted variant encoding data point (233) being closer to the user-corrected segmentation (206), the base segmentation model (220) and variant model (221) being fixed during the usage of the further model.

13. A segmentation training system (100) comprising: one or more processors (113); and one or more storage devices (114) storing a variant model (221), a base segmentation model (220), and instructions that, when executed by the one or more processors (113), cause the one or more processors (113) to perform operations for
- receiving an input image (201),
- applying the variant model (221) to the input image (201), and computing a variant encoding data point (232), the variant encoding data point (232) determining a variant segmentation for the base segmentation model (220),
- segmenting the input image (201) using the base segmentation model (220), the base segmentation model (220) receiving the input image (201) and the variant encoding data point (232), and being configured to generate a base segmentation of the input image (204), corresponding to the variant encoding data point (232),
- receiving a user-corrected segmentation (206), correcting the base segmentation of the input image (204),
- training a further model (240) from the user-corrected segmentation (206), the further model adapting the variant encoding data point (233), a new segmentation (207) from the base segmentation model (220) using the variant encoding data point (233) being closer to the user-corrected segmentation (206), the base segmentation model (220) and variant model (221) being fixed during said training.

14. A segmentation use system (100) comprising: one or more processors (113); and one or more storage devices (114) storing a variant model (221), a base segmentation model (220), and instructions that, when executed by the one or more processors, cause the one or more processors to perform operations for
- receiving an input image (201),
- applying the variant model (221) to the input image (201), and computing a variant encoding data point (232), the variant encoding data point (232) determining a variant segmentation for the base segmentation model (220),
- segmenting the input image (201) using the base segmentation model (220), the base segmentation model (220) receiving the input image (201) and the variant encoding data point (232), and being configured to generate a base segmentation of the input image (204), corresponding to the variant encoding data point (232),
- receiving a user-corrected segmentation (206), correcting the base segmentation of the input image (204).

15. A computer-readable medium (1000) comprising data (1020) representing instructions, which when executed by a processor system, cause the processor system to perform the method according to Claim 1-11.
